# EUROPEAN PATENT APPLICATION

(11) **EP 1 059 154 A2**
(43) Date of publication of application: **13.12.2000**
(21) Application number: 00102336.5
(22) Date of filing: 03.02.2000
(51) Int. Cl.: B29C 43/00, B29C 51/00

(54) **A method for producing a coated article of thermoplastic material**

(30) Priority: 11.06.1999 IT TO990505
(71) Applicant: CRS Srl Centro Ricerche e Sperimentazioni, 10060 Frossasco (IT)
(72) Inventor: Ravera, Giorgio, 10066 Torre Pellice (IT)
(74) Representative: Marchitelli, Mauro

(57) **Abstract**

A method for producing a coated article of thermoplastic material having zones with different thickness (10a, 10b) comprising the steps of: heating at least one sheet of thermoplastic material (10) at a plasticizing temperature, placing the heated sheet (10) between two dies (26, 28) cooled down at a temperature substantially lower than said plasticizing temperature, placing a coating layer (38) between the two dies (26, 28), closing the coating layer (38) and the heated sheet (10) between the dies (26, 28) so as to obtain at the same time a thermo-compression moulding of the sheet (10) and the application of the coating layer on a surface of the sheet.

The heating of the sheet (10) is carried out by compressing the sheet (10) between two heated plates (12, 14) which carry out a preliminary shaping of the sheet, so that before the thermo-compression moulding step, the heated sheet (10) has zones with different thickness (10a, 10b) in correspondence with the zones with different thickness of the finished article.

## Description

The present invention relates to a method for producing a coated article of thermoplastic material having variable thickness. More precisely, the invention relates to a method for carrying out at the same time moulding of a sheet of thermoplastic material and applying a coating layer on a surface of the sheet. In known methods, at least one sheet of thermoplastic material is heated at a plasticizing temperature, the heated sheet is placed between two dies cooled down at a temperature substantially lower than the plasticizing temperature and a coating layer is placed between the two dies. By closing the two dies, thermo-compression moulding of the sheet and the application thereon of the coating layer are obtained at the same time.

Recently the need has arisen of producing coated articles formed by one or more sheets of thermoplastic material and having variable thickness, that is having two or more zones with different thickness. With a method of the type specified above, for obtaining an article with different thickness, it is necessary to apply a different moulding pressure on the zones with different thickness. Consequently, two or more zones of the coating layer are subjected to different pressure and this fact produces undesired variations of the colour of the coating in correspondence with the zones with different thickness.

The object of the present invention is to provide a method for producing a coated article of thermoplastic material which overcomes the above drawback.

According to the present invention, this object is achieved by a method having the features forming the subject of the main claim.

The present invention will now be disclosed in detail with reference to the annexed drawings, given purely way of non-limiting example, in which:
- figures 1 and 2 are schematic cross-sections showing the step of heating a sheet in a method according to the invention,
- figures 3 and 4 are schematic cross-sections showing the step of moulding a sheet, and
- figure 5 is a schematic cross-section showing a finished article.

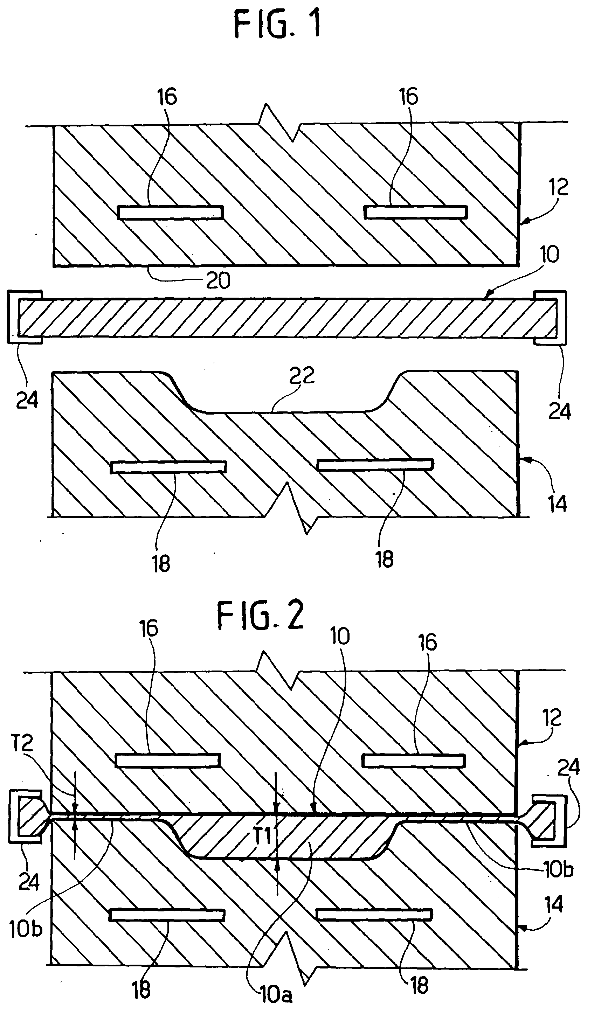

In figures 1 and 2 the numeral reference 10 indicates a sheet of thermoplastic material intended to be subjected to a thermo-compression moulding method which provides, as a preliminary step, the heating of the sheet 10 at a plasticizing temperature. In accordance with the present invention, this preliminary heating is carried out by compressing the sheet 10 between a pair of heated plates 12, 14 which carry out a preliminary shaping of the sheet 10. The heated plates 12, 14 are provided with respective heating elements 16, 18 formed for instance by electric resistors or by pipings in which a heated fluid flows. The heating elements 16, 18 maintain the plates 12, 14 at a temperature for instance of about 180-200°. The plates 12, 14 have forming surfaces 20, 22 shaped so as to carry out a preliminary forming on the sheet 10 during the heating step, as show in figure 2. The purpose of this preliminary shaping is to form in the sheet 10 zones with different thickness. In particular, in the example show in figure 2, the sheet 10 is subjected to a preliminary shaping which forms a central zone 10a with a thickness T1 and a perimetral zone 10b with a thickness T2 lower than T1.

During the heating step between the plates 12, 14, the sheet 10 is preferably held by conveyor means schematically represented by a pair of guide with C-shaped section 24 which have the purpose of transferring the heated sheet 10 from the heating station to the moulding station and precisely positioning the sheet 10 with respect to the moulding equipment, so that the zone with greater thickness 10a is positioned in correspondence with the zone of the moulding equipment which is intended to form the zone with greater thickness of the finished article and the zone with lower thickness 10b of the heated sheet is positioned in correspondence with the zone of the moulding equipment intended to form the zone with lower thickness of the finished article. The conveyor means 24 can be formed by motorised chains or by convenor devices of various type, provided that they maintain a correspondence between the heating station and the moulding station.

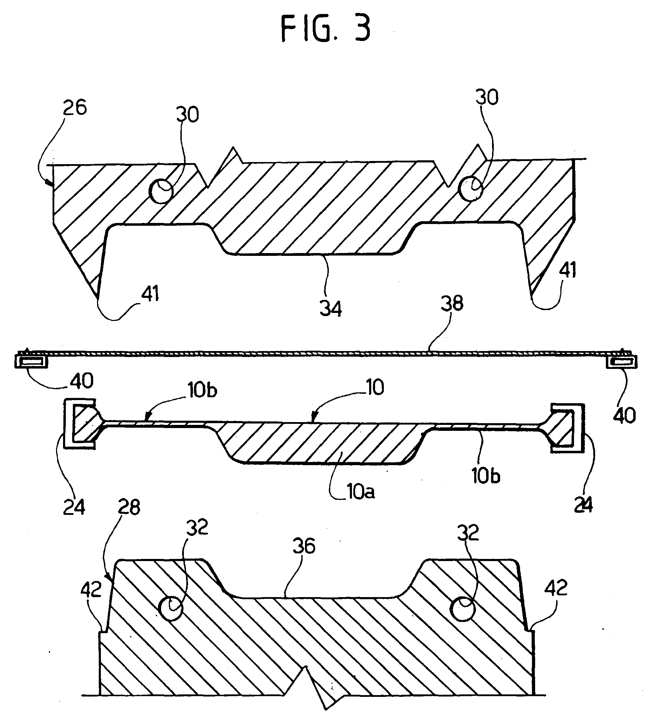

As schematically shown in figure 3, the moulding station comprises an upper die (26) and a lower die (28). The two dies (26, 28) are cooled down at a temperature which permits hardening of the sheet of thermoplastic material, for instance of about 18-20°. Such cooling is obtained, in a known way, by circulating a cold liquid (for instance water) through suitable pipings schematically indicated at 30 and 32. The dies 26, 28 have mutually complementary moulding surfaces 34, 36 intended to form an article with zones with different thickness.

As schematically shown in figure 3, the heated and preformed sheet 10 is transported between the two dies 26, 28 by the conveyor means 24 and is positioned in a predetermined way with respect to the moulding surfaces 34, 36. A coating layer 38 stretched on a frame 40 is placed between the dies 26, 28.

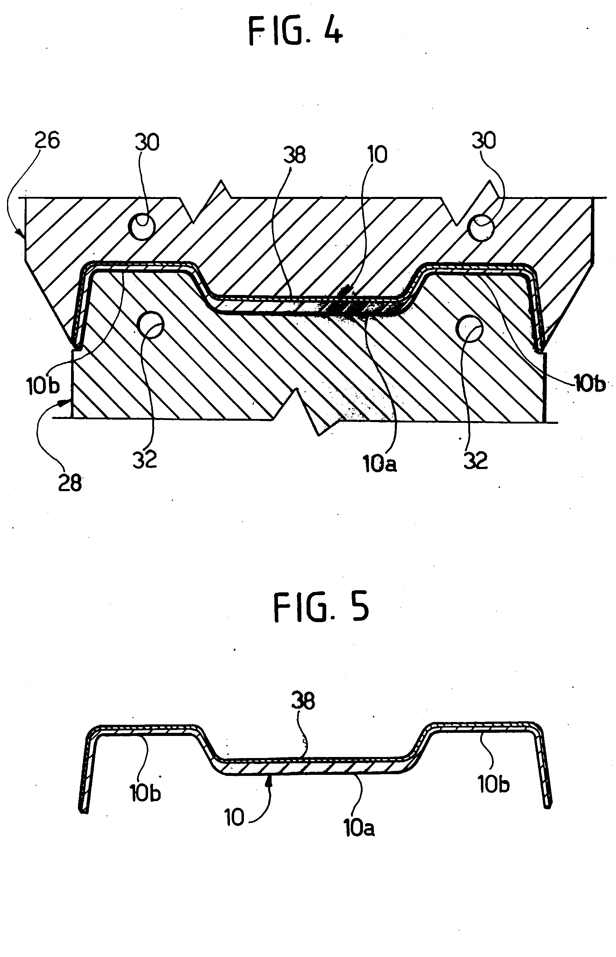

The dies 26, 28 are then closed as shown in figure 4. During this phase, the layer 38 is applied on the surface of the sheet 10 which is in a plastic state and adhers thereto. The sheet 10 is subjected to a thermo-compression moulding and cools down with the contact with the dies 26, 28. The surplus perimetral portions of the sheet and of the coating layer are cut by cutting edges 41 of one of the two dies, co-operating with a reference surface 42 formed on the other die. The fact that the sheet 10 has been subjected to a preliminary shaping permits to apply a substantially uniform moulding pressure on the zones with different thickness. In this manner problems of aesthetical nature deriving from the application of different pressures on different zones of the coating layer 18 are prevented.

Figure 5 schematically shows the coated thermoplastic article which is obtained at the end of the moulding phase. It can be seen that the article has a central zone with a greater thickness 10a and perimetral portions 10b with lower thickness. The coating 38 has uniform aesthetical appearance because during the moulding phase it has not been subjected to different pressures.

## Claims

1. A method for producing a coated article of thermoplastic material having zones with different thickness (10a, 10b) comprising the steps of: heating at least one sheet (10) of thermoplastic material at a plasticizing temperature, placing the heated sheet (10) between two dies (26, 28) cooled down at a temperature substantially lower than said plasticizing temperature, placing a coating layer (38) between the two dies (26, 28), closing the coating layer (38) and the heated sheet (10) between the dies (26, 28) so as to obtain at the same time the thermo-compression moulding of the sheet (10) and the application of the coating layer on a surface of the sheet,
characterised in that the heating of the sheet (10) is carry out by compressing the sheet (10) between two heated plates (12, 14) which carry out a preliminary shaping of the sheet, so that, before the step of thermo-compression moulding step, the heated sheet (10) has zones (10a, 10b) with different thickness in correspondence with zones with different thickness of the finished article.

2. A method according to claim 1, characterised in that the position of the sheet (10) between the dies (26, 28) is precisely correlated with the position of the sheet (10) during the step of heating and preliminary shaping.
